# EUROPEAN PATENT SPECIFICATION

(11) **EP 3 091 808 B1**
(45) Date of publication and mention of the grant of the patent: **04.10.2017**
(21) Application number: 14888587.4
(22) Date of filing: 09.04.2014
(51) Int. Cl.: H04W 48/16, H04W 52/02, H04W 36/00, H04W 48/20, H04W 74/00

(54) **METHODS FOR TRANSMITTING SYSTEM INFORMATION, BASE STATION AND USER EQUIPMENT**
VERFAHREN ZUR ÜBERTRAGUNG VON SYSTEMINFORMATIONEN, BASISSTATION UND BENUTZERVORRICHTUNG
PROCÉDÉS D'ÉMISSION POUR INFORMATIONS DE SYSTÈME, STATION DE BASE ET ÉQUIPEMENT UTILISATEUR

(43) Date of publication of application: 09.11.2016
(60) Divisional application: 17186734.4
(73) Proprietor: Huawei Technologies Co., Ltd., Longgang District Shenzhen, Guangdong 518129 (CN)
(72) Inventor: LI, Sainan, Shenzhen Guangdong 518129 (CN); HUANG, Huang, Shenzhen Guangdong 518129 (CN); HUANG, Lei, Shenzhen Guangdong 518129 (CN)
(74) Representative: Pfenning, Meinig & Partner mbB
(86) International application number: PCT/CN2014/074978
(87) International publication number: WO 2015/154248

(56) References cited:
- EP-A2- 1 213 941
- WO-A1-00/60895
- CN-A- 102 045 865
- CN-A- 102 090 109
- CN-A- 103 428 703
- US-A1- 2004 152 480
- US-A1- 2009 203 381
- US-A1- 2013 217 392

## Description

### TECHNICAL FIELD

The present invention relates to the field of communications technologies, and specifically, to a system information transmission method, a base station, and user equipment.

### BACKGROUND

With rapid development of mobile communications technologies, user equipment imposes increasingly high requirements on a capacity, a data throughput rate, transmission delay, and transmission reliability of a communications system. A bandwidth of a conventional microwave frequency band is between 300 MHZ and 6 GHZ (including 300 MHZ and 6 GHZ). The provided bandwidth is very limited, which cannot meet the requirements of the user equipment on the communications system. Further, because microwave communication (also referred to as "low-frequency communication") is characterized by a small transmission loss and a wide coverage range, low-frequency base stations are distributed sparsely, and construction costs of a low-frequency base station are relatively high. A bandwidth of a millimetric wave frequency band is between 30 GHZ and 300 GHZ (including 30 GHZ and 300 GHZ), and millimetric wave communication (also referred to as "high-frequency communication") is characterized by a large capacity and a high data throughput rate. However, obstacles cause relatively large losses in millimetric wave communication, which results in a small coverage range of a high-frequency base station. To meet the requirements of the user equipment on the communications system, low/high-frequency collaborative networking has emerged. However, in a system architecture with low/high-frequency collaborative networking, to enable the user equipment to access a high-frequency network and a low-frequency network, both the high-frequency network and the low-frequency network need to send respective system information (such as a timer, common channel information, cell selection and reselection information, and neighboring cell information required by the user equipment), which occupies a relatively large quantity of channel resources. Further, the user equipment needs to search for both the high-frequency network and the low-frequency network, which causes relatively high power consumption. US2009203381A1 provides a mobile communication system, a radio network controller (RNC), and a neighbor cell list filtering method which can control the selection of a frequency to be used at the hard handover performed in a network environment using a plurality of frequency bands and frequencies to reduce the number of activation of the compressed mode operation as much as possible. The RNC produces a filtered neighbor cell list by using information contained in the UE capability indication reported by the user equipment and the use priority data on frequencies designated by the network operator, and neighbor cell information only suitable for the handover is left in the neighbor cell list and notified to the user equipment.
WO0060895A1 discloses a data mechanism for assisting third generational mobile radio systems to handoff mobile radio connection to neighboring cells when the neighboring cells are of a foreign generational type. The data mechanism includes a container in the data map which is a generic structure, not particular to any generation system. The generic structure can be content-specific to any of many different generational communications protocol.

### SUMMARY

Embodiments of the present invention disclose system information transmission methods a base station, and user equipment according to the independent claims, to resolve existing problems in low/high-frequency collaborative networking that many channel resources are occupied and power consumption of user equipment is high. Preferred embodiments are defined by the dependent claims.

### BRIEF DESCRIPTION OF DRAWINGS

To describe the technical solutions in the embodiments of the present invention more clearly, the following briefly describes the accompanying drawings required for describing the embodiments and examples, useful for understanding the invention. Apparently, the accompanying drawings in the following description show merely some embodiments and examples, and a person of ordinary skill in the art may still derive other drawings from these accompanying drawings without creative efforts.
FIG. 1 is a schematic structural diagram of a base station;
FIG. 2 is a schematic structural diagram of another base station;
FIG. 3 is a schematic structural diagram of user equipment;
FIG. 4 is a schematic structural diagram of another user equipment;
FIG. 5 is a schematic flowchart of a system information transmission method;
FIG. 6 is a schematic flowchart of another system information transmission method;
FIG. 7 is a schematic flowchart of still another system information transmission method;
FIG. 8 is a schematic flowchart of still another system information transmission method;
FIG. 9A and FIG. 9B are a schematic flowchart of still another system information transmission method;
FIG. 10A and FIG. 10B are a schematic flowchart of still another system information transmission method; and
FIG. 11 is a schematic structural diagram of system information.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention as defined by the independent claims.

The embodiments of the present invention disclose system information transmission methods, a base station, and user equipment. According to the embodiments of the present invention, system information of a first base station is sent cyclically, and system information of a second base station is sent on demand, which decreases load of a broadcast channel. Moreover, user equipment does not need to search for two types of base stations, which reduces power consumption of the user equipment. Respective detailed descriptions are provided below.

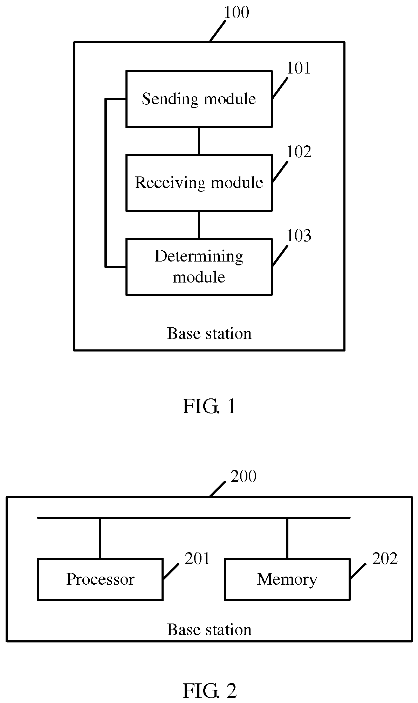

Referring to FIG. 1, FIG. 1 is a schematic structural diagram of a base station As shown in FIG. 1, the base station 100 may include a sending module 101, a receiving module 102, and a determining module 103.

The sending module 101 is configured to send system information of the base station 100 to user equipment at a frequency of the base station 100.

The sending module 101 sends the system information of the base station 100 to the user equipment, to trigger the user equipment to access the base station 100 according to the system information of the base station 100, that is, to access a network (a high-frequency network or a low-frequency network) provided by the base station 100.

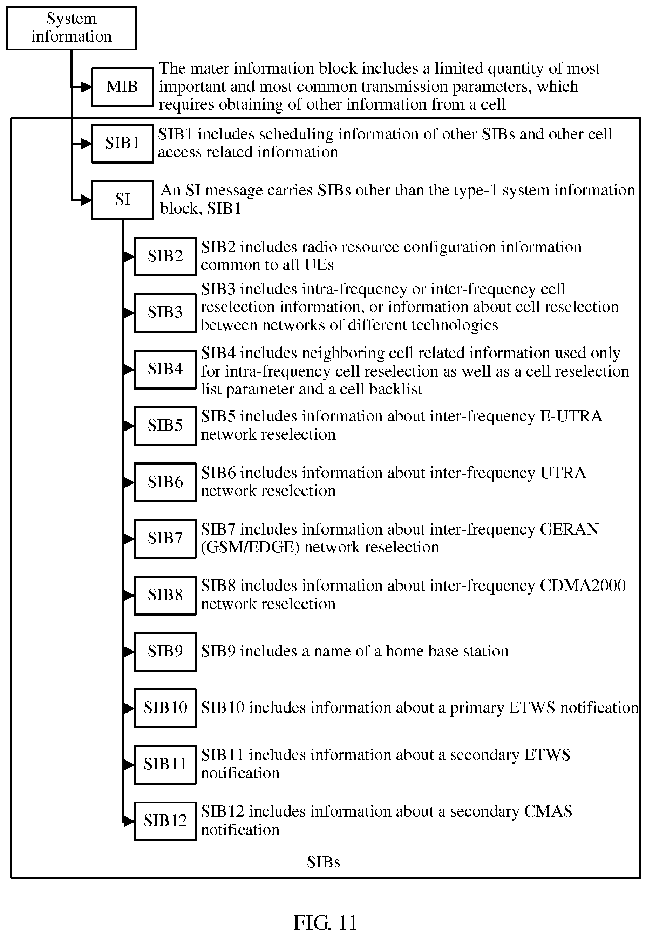

A structure of the system information includes one master information block and multiple system information blocks, where the master information block is used to broadcast state information of the base station 100, and the system information blocks are used to broadcast access information required by the user equipment for accessing the base station 100. The structure of the system information may be shown in FIG. 11.

The receiving module 102 is configured to receive identifiers of coverage base stations that cover the user equipment and access capability information of the user equipment that are sent by the user equipment.

After accessing the base station 100, the user equipment sends the identifiers of the coverage base stations that cover the user equipment and the access capability information of the user equipment to the base station 100. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the base station 100 is located. For example, if the frequency of the base station 100 is located in a low-frequency frequency band, the target frequency band may be a high-frequency frequency band that the user equipment is allowed to access; and if the frequency of the base station 100 is located in a high-frequency frequency band, the target frequency band may be a low-frequency frequency band that the user equipment is allowed to access.

The determining module 103 is configured to determine, from the coverage base stations and according to the target frequency band, one or more target base stations whose frequencies are located in the target frequency band.

The sending module 101 is further configured to send system information of the one or more target base stations to the user equipment.

The base station 100 may pre-store the system information of the one or more target base stations, and send the stored system information of the one or more target base stations to the user equipment; or the base station 100 may first obtain the system information of the one or more target base stations from the target base stations, and then, send the system information of the one or more target base stations to the user equipment.

The base station 100 sends the system information of the one or more target base stations to the user equipment, so that the user equipment selects system information of one target base station from the system information of the one or more target base stations as system information of a target access base station, and accesses the target access base station according to the system information of the target access base station.

If the base station 100 is a high-frequency base station, the target access base station is a low-frequency base station or a hybrid low/high-frequency base station, and if the target access base station is a hybrid low/high-frequency base station, that the user equipment accesses the target access base station is that the user equipment accesses a low-frequency network of the hybrid low/high-frequency base station. If the base station 100 is a low-frequency base station, the target access base station is a high-frequency base station or a hybrid low/high-frequency base station, and if the target access base station is a hybrid low/high-frequency base station, that the user equipment accesses the target access base station is that the user equipment accesses a high-frequency network of the hybrid low/high-frequency base station. If the base station 100 is a hybrid low/high-frequency base station, and the user equipment accesses a high-frequency network of the hybrid low/high-frequency base station, the target access base station may be a low-frequency base station or a hybrid low/high-frequency base station (the base station 100 or another hybrid low/high-frequency base station), and if the target access base station is a hybrid low/high-frequency base station, that the user equipment accesses the target access base station is that the user equipment accesses a low-frequency network of the hybrid low/high-frequency base station. If the base station 100 is a hybrid low/high-frequency base station, and the user equipment accesses a low-frequency network of the hybrid low/high-frequency base station, the target access base station may be a high-frequency base station or a hybrid low/high-frequency base station (the base station 100 or another hybrid low/high-frequency base station), and if the target access base station is a hybrid low/high-frequency base station, that the user equipment accesses the target access base station is that the user equipment accesses a high-frequency network of the hybrid low/high-frequency base station.

In an optional implementation manner, before the sending module 101 sends the system information of the one or more target base stations to the user equipment, the sending module 101 may be further configured to send, to the one or more target base stations, a request message for requesting the one or more target base stations to send system information.

The receiving module 102 may be further configured to receive the system information sent by the one or more target base stations.

In another optional implementation manner, the base station 100 stores the system information of the one or more target base stations, and the receiving module 102 may be further configured to receive updated system information sent by the one or more target base stations.

The sending module 101 may be further configured to send, to the one or more target base stations, a feedback message for feeding back whether the base station 100 has finished receiving the updated system information.

If the feedback message is used to feed back that the base station 100 has not finished receiving the updated system information, the one or more target base stations continue sending the updated system information to the base station 100.

System information of a base station is sent cyclically, and system information of a target access base station may be sent to user equipment by the base station on demand of the user equipment, which decreases load of a broadcast channel. Moreover, the user equipment does not need to search for the target access base station, which reduces power consumption of the user equipment.

Referring to FIG. 2, FIG. 2 is a schematic structural diagram of another base station. As shown in FIG. 2, the base station 200 may include a memory 201 and a processor 202, where the memory 201 stores a set of program code, and the processor 202 is configured to invoke the program code stored in the memory 201 to execute the following operations:
sending system information of the base station 200 to user equipment at a frequency of the base station 200, to trigger the user equipment to access the base station 200 according to the system information of the base station 200;
receiving identifiers of coverage base stations that cover the user equipment and access capability information of the user equipment that are sent by the user equipment, where the access capability information is used to indicate a target frequency band that the user equipment is allowed to access, and the target frequency band is different from a frequency band in which the frequency of the base station 200 is located;
determining, from the coverage base stations and according to the target frequency band, one or more target base stations whose frequencies are located in the target frequency band;and
sending system information of the one or more target base stations to the user equipment, to trigger the user equipment to select system information of one target base station from the system information of the one or more target base stations as system information of a target access base station, and access the target access base station according to the system information of the target access base station.

Before the processor 202 sends the system information of the one or more target base stations to the user equipment, the processor 202 invokes the program code stored in the memory 201 to further execute the following operations:
sending, to the one or more target base stations, a request message for requesting the one or more target base stations to send system information, to trigger the one or more target base stations to respond to the request message; and
receiving the system information sent by the one or more target base stations.

In an embodiment, the base station 200 stores the system information of the one or more target base stations, and the processor 202 invokes the program code stored in the memory 201 to further execute the following operations:
receiving updated system information sent by the one or more target base stations; and
sending, to the one or more target base stations, a feedback message for feeding back whether the base station 200 has finished receiving the updated system information.

When the base station 200 is a high-frequency base station, the target access base station is a low-frequency base station or a hybrid low/high-frequency base station; or when the base station 200 is a low-frequency base station, the target access base station is a high-frequency base station or a hybrid low/high-frequency base station; or when the base station 200 is a hybrid low/high-frequency base station, the target access base station is any one base station of a high-frequency base station, a low-frequency base station, or a hybrid low/high-frequency base station.

A structure of the system information includes one master information block and multiple system information blocks, where the master information block is used to broadcast state information of the base station that sends the system information, and the system information blocks are used to broadcast access information required by the user equipment for accessing the base station that sends the system information.

System information of a base station is sent cyclically, and system information of a target access base station may be sent to user equipment by the base station on demand of the user equipment, which decreases load of a broadcast channel. Moreover, the user equipment does not need to search for the target access base station, which reduces power consumption of the user equipment.

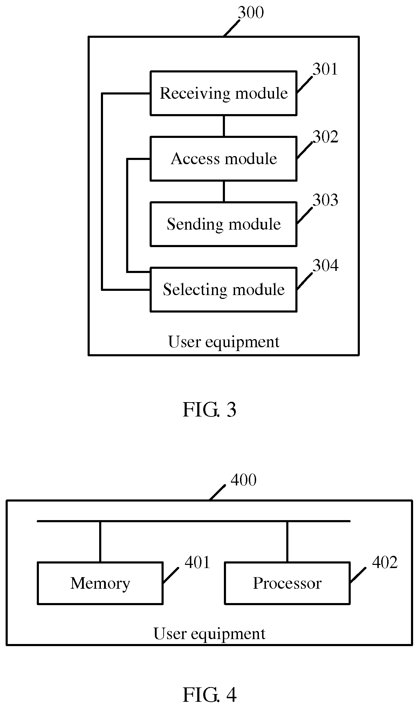

Referring to FIG. 3, FIG. 3 is a schematic structural diagram of user equipment. As shown in FIG. 3, the user equipment 300 may include a receiving module 301, an access module 302, a sending module 303, and a selecting module 304.

The receiving module 301 is configured to receive system information of a first base station that is sent by the first base station at a frequency of the first base station.

A structure of the system information includes one master information block and multiple system information blocks, where the master information block is used to broadcast state information of the base station, and the system information blocks are used to broadcast access information required by the user equipment 300 for accessing the base station. The structure of the system may be shown in FIG. 11.

The access module 302 is configured to access the first base station according to the system information of the first base station.

When accessing the first base station the user equipment 300 accesses a network (a high-frequency network or a low-frequency network) provided by the first base station.

The sending module 303 is configured to send identifiers of coverage base stations that cover the user equipment 300 and access capability information of the user equipment 300 to the first base station.

After accessing the first base station, the user equipment 300 sends the identifiers of the coverage base stations that cover the user equipment 300 and the access capability information of the user equipment 300 to the first base station. Optionally, the coverage base stations that cover the user equipment 300 may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment 300 is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment 300 is allowed to access; and if the frequency of the first base station is located in a high-frequency frequency band, the target frequency band may be a low-frequency frequency band that the user equipment 300 is allowed to access.

The user equipment 300 sends the identifiers of the coverage base stations that cover the user equipment 300 and the access capability information of the user equipment 300 to the first base station, so that the first base station determines, from the coverage base stations according to the target frequency band in the access capability information, one or more target base stations whose frequencies are located in the target frequency band, and sends system information of the one or more target base stations to the user equipment 300. Optionally, the first base station may pre-store the system information of the one or more target base stations, and send the stored system information of the one or more target base stations to the user equipment 300; or the first base station may first obtain the system information of the one or more target base stations from the target base stations, and then, send the system information of the one or more target base stations to the user equipment 300.

The receiving module 301 is further configured to receive the system information of the one or more target base stations sent by the first base station.

The selecting module 304 is configured to select system information of one target base station from the system information of the one or more target base stations as system information of a second base station.

The access module 302 is further configured to access the second base station according to the system information of the second base station.

If the first base station is a high-frequency base station, the second base station is a low-frequency base station or a hybrid low/high-frequency base station, and if the second base station is a hybrid low/high-frequency base station, that the user equipment 300 accesses the second base station is that the user equipment 300 accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment 300 accesses the second base station is that the user equipment 300 accesses a high-frequency network of the hybrid low/high-frequency base station. If the first base station is a hybrid low/high-frequency base station, and the user equipment 300 accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment 300 accesses the second base station is that the user equipment 300 accesses a low-frequency network of the hybrid low/high-frequency base station. If the first base station is a hybrid low/high-frequency base station, and the user equipment 300 accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment 300 accesses the second base station is that the user equipment 300 accesses a high-frequency network of the hybrid low/high-frequency base station.

The user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

Referring to FIG. 4, FIG. 4 is a schematic structural diagram of another user equipment. As shown in FIG. 4, the user equipment 400 may include a memory 401 and a processor 402, where the memory 401 stores a set of program code, and the processor 402 is configured to invoke the program code stored in the memory 401 to execute the following operations:
receiving system information of a first base station that is sent by the first base station at a frequency of the first base station;
accessing the first base station according to the system information of the first base station;
sending identifiers of coverage base stations that cover the user equipment 400 and access capability information of the user equipment 400 to the first base station, where the access capability information is used to indicate a target frequency band that the user equipment 400 is allowed to access, and the target frequency band is different from a frequency band in which the frequency of the first base station is located, so that the first base station determines, from the coverage base stations and according to the target frequency band, one or more target base stations whose frequencies are located in the target frequency band, and sends system information of the one or more target base stations to the user equipment 400;
receiving the system information of the one or more target base stations sent by the first base station; and
selecting system information of one target base station from the system information of the one or more target base stations as system information of a second base station, and accessing the second base station according to the system information of the second base station.

When the first base station is a high-frequency base station, the second base station is a low-frequency base station or a hybrid low/high-frequency base station; or when the first base station is a low-frequency base station, the second base station is a high-frequency base station or a hybrid low/high-frequency base station; or when the first base station is a hybrid low/high-frequency base station, the second base station is any one base station of a high-frequency base station, a low-frequency base station, or a hybrid low/high-frequency base station.

A structure of the system information includes one master information block and multiple system information blocks, where the master information block is used to broadcast state information of the base station that sends the system information, and the system information blocks are used to broadcast access information required by the user equipment 400 for accessing the base station that sends the system information.

The user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

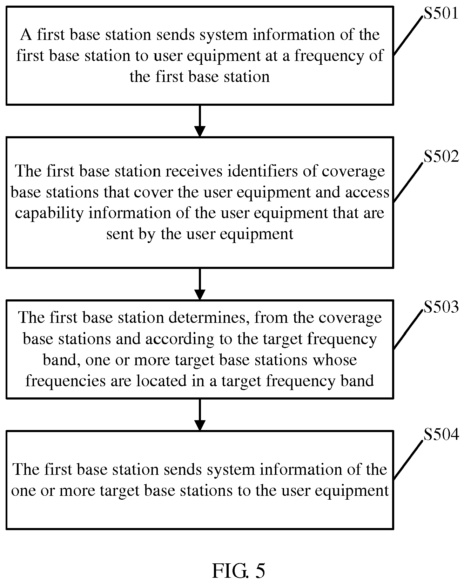

Referring to FIG. 5, FIG. 5 is a schematic flowchart of a system information transmission method. The method shown in FIG. 5 may be applied to a system architecture with low/high-frequency collaborative networking. As shown in FIG. 5, the system information transmission method may include the following steps:
S501: A first base station sends system information of the first base station to user equipment at a frequency of the first base station.

The system information of the first base station is used to trigger the user equipment to access the first base station according to the system information of the first base station, that is, to access a network (a high-frequency network or a low-frequency network) provided by the first base station.

A structure of the system information includes one master information block and multiple system information blocks, where the master information block is used to broadcast state information of the base station, and the system information blocks are used to broadcast access information required by the user equipment for accessing the base station. The structure of the system information may be shown in FIG. 11. FIG. 11 is a schematic structural diagram of system information according to an embodiment of the present invention. As shown in FIG. 11, the system information includes one MIB (master information block) and 12 SIBs (system information block). The MIB is carried on a BCCH (broadcast control channel) → a BCH (broadcast channel) → a PBCH (physical broadcast channel), and the MIB includes a limited quantity of most important and most common transmission parameters (such as a system bandwidth, a system frame number, and configuration information of a physical hybrid automatic repeat indicator channel) for acquiring other cell information. All SIBs except SIB1, including SIB2 to SIB12, are carried in SI (system information). In the system information, SIB1 is the most important system information second to the MIB, and carries scheduling information of SIB2 to SIB12, other cell access related information, and the like.

S502: The first base station receives identifiers of coverage base stations that cover the user equipment and access capability information of the user equipment that are sent by the user equipment.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S503: The first base station determines, from the coverage base stations according to the target frequency band, one or more target base stations whose frequencies are located in a target frequency band.

S504: The first base station sends system information of the one or more target base stations to the user equipment.

The first base station may pre-store the system information of the one or more target base stations, and send the stored system information of the one or more target base stations to the user equipment; or the first base station may first obtain the system information of the one or more target base stations from the target base stations, and then, send the system information of the one or more target base stations to the user equipment.

The first base station sends the system information of the one or more target base stations to the user equipment, so that the user equipment selects system information of one target base station from the system information of the one or more target base stations as system information of a second base station, and accesses the second base station according to the system information of the second base station.

If the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

A first base station sends system information of the first base station to user equipment at a frequency of the first base station, to trigger the user equipment to access the first base station according to the system information of the first base station; then, receives identifiers of coverage base stations that cover the user equipment and access capability information of the user equipment that are sent by the user equipment, where the access capability information is used to indicate a target frequency band that the user equipment is allowed to access, and the target frequency band is different from a frequency band in which the frequency of the first base station is located; and the first base station determines, from the coverage base stations and according to the target frequency band, one or more target base stations whose frequencies are located in the target frequency band, and sends system information of the one or more target base stations to the user equipment, to trigger the user equipment to select system information of one target base station from the system information of the one or more target base stations as system information of a second base station, and access the second base station according to the system information of the second base station. According to this embodiment of the present invention, system information of a first base station is sent cyclically, and system information of a second base station is sent on demand, which decreases load of a broadcast channel. Moreover, user equipment does not need to search for two types of base stations, which reduces power consumption of the user equipment and ensures a requirement of the user equipment on a communications system.

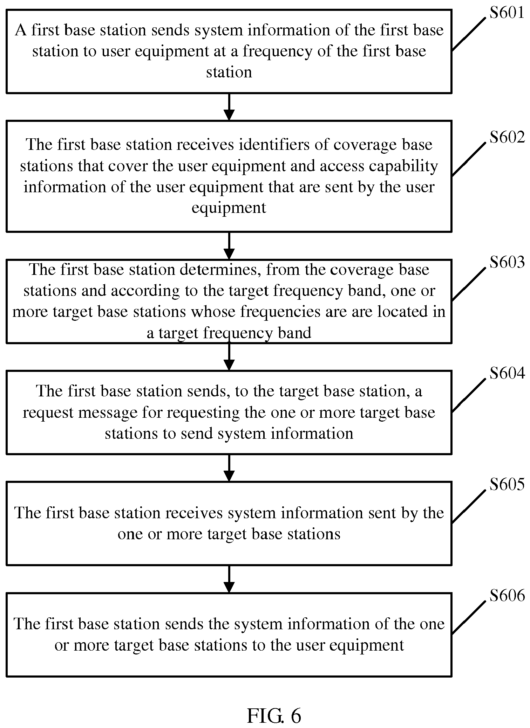

Referring to FIG. 6, FIG. 6 is a schematic flowchart of another system information transmission method. The method shown in FIG. 6 may be applied to a system architecture with low/high-frequency collaborative networking. As shown in FIG. 6, the system information transmission method may include the following steps:
S601: A first base station sends system information of the first base station to user equipment at a frequency of the first base station.

The system information of the first base station is used to trigger the user equipment to access the first base station according to the system information of the first base station, that is, to access a network (a high-frequency network or a low-frequency network) provided by the first base station.

A structure of the system information includes one master information block and multiple system information blocks, where the master information block is used to broadcast state information of the base station, and the system information blocks are used to broadcast access information required by the user equipment for accessing the base station. The structure of the system information may be shown in FIG. 11.

S602: The first base station receives identifiers of coverage base stations that cover the user equipment and access capability information of the user equipment that are sent by the user equipment.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S603: The first base station determines, from the coverage base stations according to the target frequency band, one or more target base stations whose frequencies are located in a target frequency band.

S604: The first base station sends, to the one or more target base stations, a request message for requesting the one or more target base stations to send system information.

After receiving the request message, the one or more target base stations send the system information of the one or more target base stations to the first base station.

S605: The first base station receives system information sent by the one or more target base stations.

S606: The first base station sends the system information of the one or more target base stations to the user equipment.

The first base station sends the system information of the one or more target base stations to the user equipment, so that the user equipment selects system information of one target base station from the system information of the one or more target base stations as system information of a second base station, and accesses the second base station according to the system information of the second base station.

If the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

System information of a first base station is sent cyclically, and system information of a second base station is sent on demand, which decreases load of a broadcast channel. Moreover, the system information of the second base station may be sent by the first base station to user equipment by means of real-time communication between the base stations, and the user equipment does not need to search for the second base station, which reduces power consumption of the user equipment and ensures a requirement of the user equipment on a communications system.

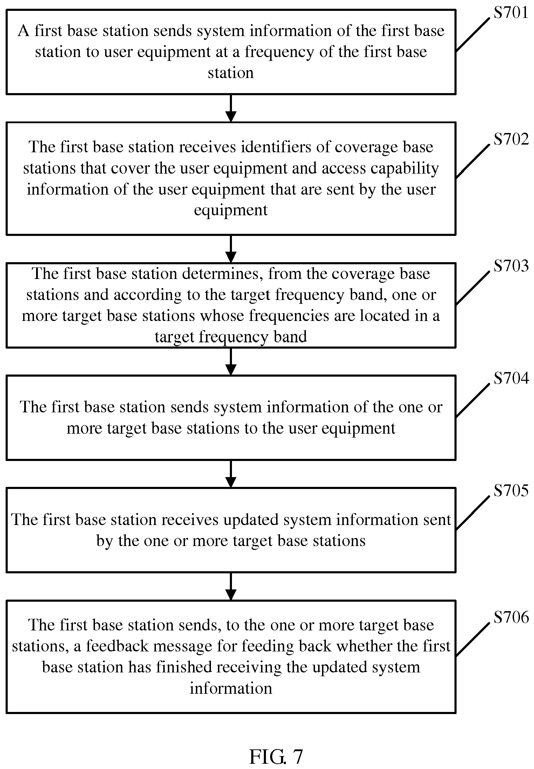

Referring to FIG. 7, FIG. 7 is a schematic flowchart of still another system information transmission method. The method shown in FIG. 7 may be applied to a system architecture with low/high-frequency collaborative networking. As shown in FIG. 7, the system information transmission method may include the following steps:
S701: A first base station sends system information of the first base station to user equipment at a frequency of the first base station.

The system information of the first base station is used to trigger the user equipment to access the first base station according to the system information of the first base station, that is, to access a network (a high-frequency network or a low-frequency network) provided by the first base station.

A structure of the system information includes one master information block and multiple system information blocks, where the master information block is used to broadcast state information of the base station, and the system information blocks are used to broadcast access information required by the user equipment for accessing the base station. The structure of the system information in this embodiment of the present invention may be shown in FIG. 11.

S702: The first base station receives identifiers of coverage base stations that cover the user equipment and access capability information of the user equipment that are sent by the user equipment.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

S703: The first base station determines, from the coverage base stations according to the target frequency band, one or more target base stations whose frequencies are located in a target frequency band.

S704: The first base station sends system information of the one or more target base stations to the user equipment.

The first base station may store the system information of the one or more target base stations.

The first base station sends the system information of the one or more target base stations to the user equipment, so that the user equipment selects system information of one target base station from the system information of the one or more target base stations as system information of a second base station, and accesses the second base station according to the system information of the second base station.

S705: The first base station receives updated system information sent by the one or more target base stations.

S706: The first base station sends, to the one or more target base stations, a feedback message for feeding back whether the first base station has finished receiving the updated system information.

In this embodiment of the present invention, if the feedback message is used to feed back that the first base station has not finished receiving the updated system information, the one or more target base stations continue sending the updated system information to the first base station.

System information of a first base station is sent cyclically, the first base station stores system information of a second base station, and the system information of the second base station may be sent by the first base station to user equipment on demand of the user equipment, which decreases load of a broadcast channel. When the system information of the second base station is updated, the system information of the second base station stored by the first base station can also be updated in a timely manner, which ensures reliability of a communications system. Moreover, the user equipment does not need to search for the second base station, which reduces power consumption of the user equipment.

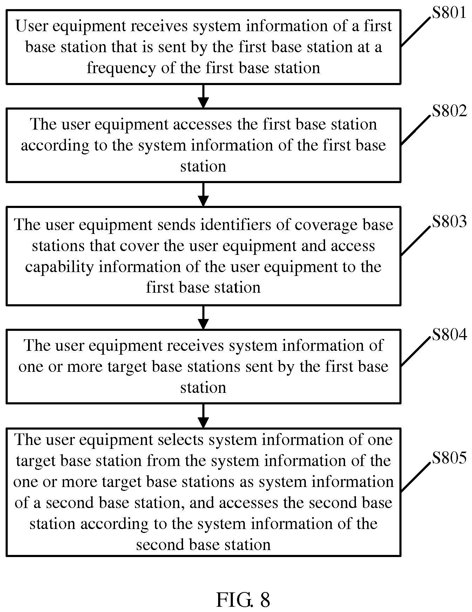

Referring to FIG. 8, FIG. 8 is a schematic flowchart of still another system information transmission method. The method shown in FIG. 8 may be applied to a system architecture with low/high-frequency collaborative networking. As shown in FIG. 8, the system information transmission method may include the following steps:
S801: User equipment receives system information of a first base station that is sent by the first base station at a frequency of the first base station.

A structure of the system information includes one master information block and multiple system information blocks, where the master information block is used to broadcast state information of the base station, and the system information blocks are used to broadcast access information required by the user equipment for accessing the base station. The structure of the system may be shown in FIG. 11.

S802: The user equipment accesses the first base station according to the system information of the first base station.

When accessing the first base station the user equipment accesses a network (a high-frequency network or a low-frequency network) provided by the first base station.

S803: The user equipment sends identifiers of coverage base stations that cover the user equipment and access capability information of the user equipment to the first base station.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

The user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment. Optionally, the first base station may pre-store the system information of the one or more target base stations, and send the stored system information of the one or more target base stations to the user equipment; or the first base station may first obtain the system information of the one or more target base stations from the target base stations, and then, send the system information of the one or more target base stations to the user equipment.

S804: The user equipment receives system information of one or more target base stations sent by the first base station.

S805: The user equipment selects system information of one target base station from the system information of the one or more target base stations as system information of a second base station, and accesses the second base station according to the system information of the second base station.

If the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

The user equipment does not need to search for both a first base station and a second base station, which reduces power consumption of the user equipment. Moreover, system information of the first base station is sent cyclically, and system information of the second base station is sent by the first base station on demand of the user equipment, which decreases load of a broadcast channel.

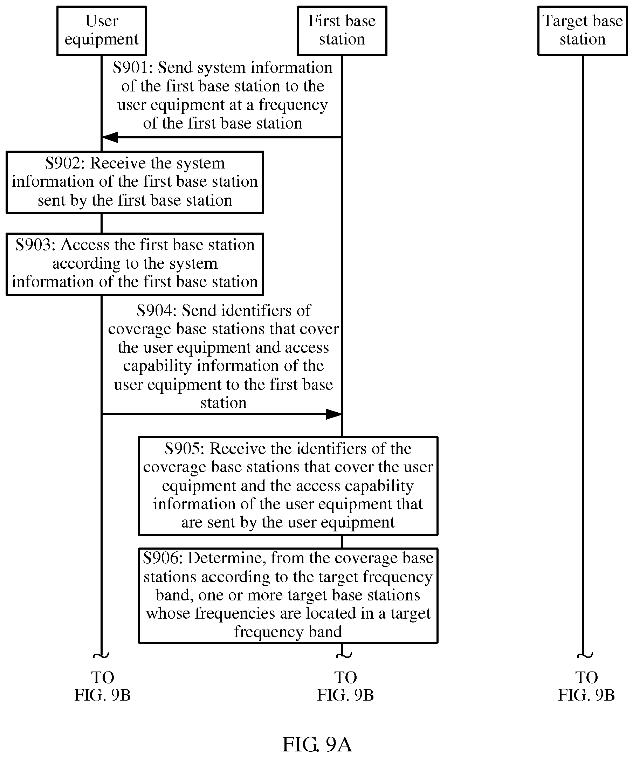

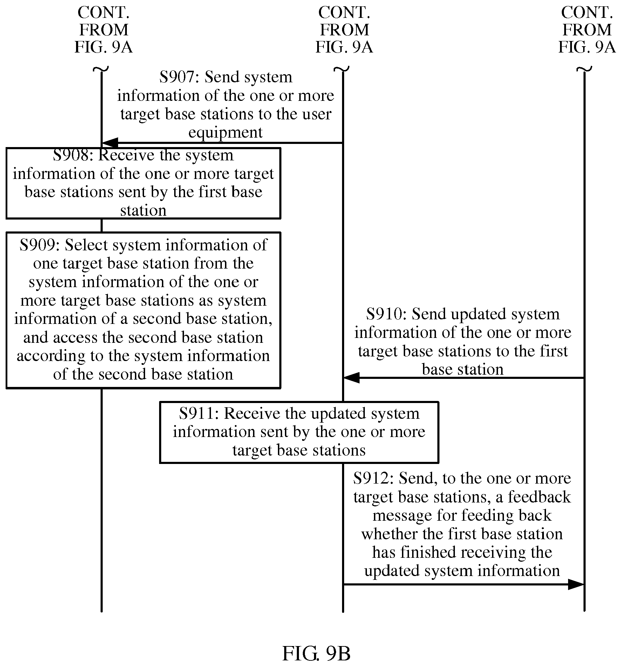

Referring to FIG. 9A and FIG. 9B, FIG. 9A and FIG. 9B are a schematic flowchart of still another system information transmission method. The method shown in FIG. 9A and FIG. 9B may be applied to a system architecture with low/high-frequency collaborative networking, which is not limited by this embodiment of the present invention. As shown in FIG. 9A and FIG. 9B, the system information transmission method may include the following steps:
S901: A first base station sends system information of the first base station to user equipment at a frequency of the first base station.

The system information of the first base station is used to trigger the user equipment to access the first base station according to the system information of the first base station, that is, to access a network (a high-frequency network or a low-frequency network) provided by the first base station.

A structure of the system information includes one master information block and multiple system information blocks, where the master information block is used to broadcast state information of the base station, and the system information blocks are used to broadcast access information required by the user equipment for accessing the base station. The structure of the system information may be shown in FIG. 11.

S902: The user equipment receives the system information of the first base station sent by the first base station.

S903: The user equipment accesses the first base station according to the system information of the first base station.

S904: The user equipment sends identifiers of coverage base stations that cover the user equipment and access capability information of the user equipment to the first base station.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

The user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment.

S905: The first base station receives the identifiers of the coverage base stations that cover the user equipment and the access capability information of the user equipment that are sent by the user equipment.

S906: The first base station determines, from the coverage base stations according to the target frequency band, one or more target base stations whose frequencies are located in a target frequency band.

S907: The first base station sends system information of the one or more target base stations to the user equipment.

The first base station may store the system information of the one or more target base stations.

The first base station sends the system information of the one or more target base stations to the user equipment, so that the user equipment selects system information of one target base station from the system information of the one or more target base stations as system information of a second base station, and accesses the second base station according to the system information of the second base station.

S908: The user equipment receives the system information of the one or more target base stations sent by the first base station.

S909: The user equipment selects system information of one target base station from the system information of the one or more target base stations as system information of a second base station, and accesses the second base station according to the system information of the second base station.

If the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

S910: The one or more target base stations send updated system information of the one or more target base stations to the first base station.

S911: The first base station receives the updated system information sent by the one or more target base stations.

S912: The first base station sends, to the one or more target base stations, a feedback message for feeding back whether the first base station has finished receiving the updated system information.

If the feedback message is used to feed back that the first base station has not finished receiving the updated system information, the one or more target base stations continue sending the updated system information to the first base station.

System information of a first base station is sent cyclically, the first base station stores system information of a second base station, and the system information of the second base station may be sent by the first base station to user equipment on demand of the user equipment, which decreases load of a broadcast channel. When the system information of the second base station is updated, the system information of the second base station stored by the first base station can also be updated in a timely manner, which ensures reliability of a communications system. Moreover, the user equipment does not need to search for the second base station, which reduces power consumption of the user equipment.

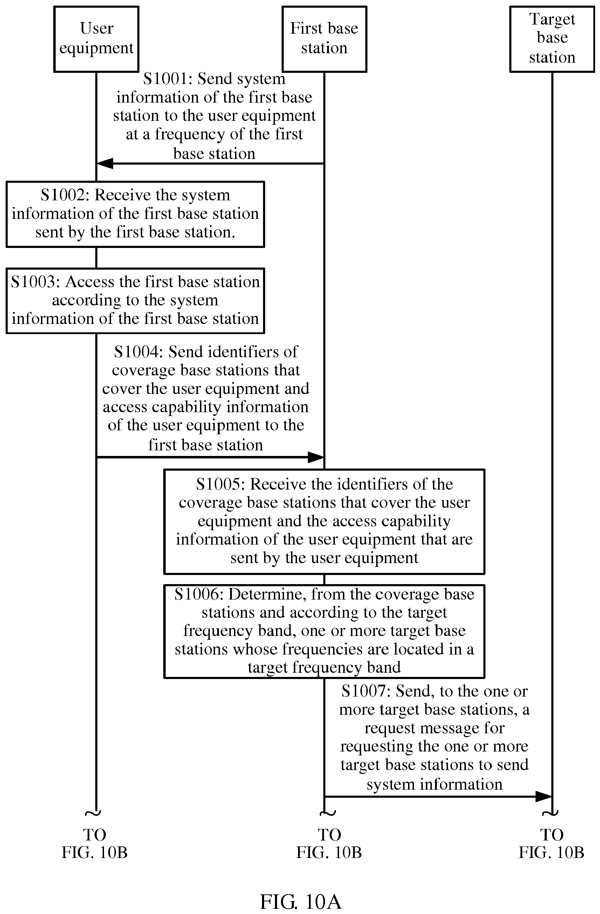

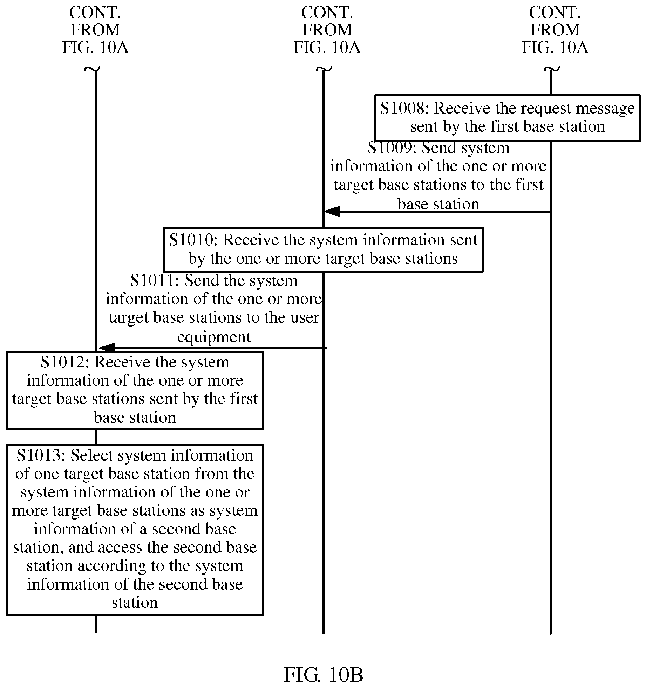

Referring to FIG. 10A and FIG. 10B, FIG. 10A and FIG. 10B are a schematic flowchart of still another system information transmission. The method shown in FIG. 10A and FIG. 10B may be applied to a system architecture with low/high-frequency collaborative networking. As shown in FIG. 10A and FIG. 10B, the system information transmission method may include the following steps:
S1001: A first base station sends system information of the first base station to user equipment at a frequency of the first base station.

The system information of the first base station is used to trigger the user equipment to access the first base station according to the system information of the first base station, that is, to access a network (a high-frequency network or a low-frequency network) provided by the first base station.

A structure of the system information includes one master information block and multiple system information blocks, where the master information block is used to broadcast state information of the base station, and the system information blocks are used to broadcast access information required by the user equipment for accessing the base station. The structure of the system information may be shown in FIG. 11.

S1002: The user equipment receives the system information of the first base station sent by the first base station.

S1003: The user equipment accesses the first base station according to the system information of the first base station.

S1004: The user equipment sends identifiers of coverage base stations that cover the user equipment and access capability information of the user equipment to the first base station.

After accessing the first base station, the user equipment sends the identifiers of the coverage base stations that cover the user equipment and the access capability information of the user equipment to the first base station. Optionally, the coverage base stations that cover the user equipment may include a high-frequency base station, a low-frequency base station, and a hybrid low/high-frequency base station. Optionally, the access capability information may be used to indicate a target frequency band (such as a high-frequency frequency band or a low-frequency frequency band) that the user equipment is allowed to access. Optionally, the target frequency band may be different from a frequency band in which the frequency of the first base station is located. For example, if the frequency of the first base station is located in a low-frequency frequency band, the target frequency band may be a high-frequency frequency band that the user equipment is allowed to access; and if the frequency of the first base station is located in a high-frequency frequency band, the target frequency band may be a low-frequency frequency band that the user equipment is allowed to access.

The user equipment sends the identifiers of the coverage base stations that cover the user equipment and the access capability information of the user equipment to the first base station, so that the first base station determines, from the coverage base stations according to the target frequency band in the access capability information, one or more target base stations whose frequencies are located in the target frequency band, and sends system information of the one or more target base stations to the user equipment.

S1005: The first base station receives the identifiers of the coverage base stations that cover the user equipment and the access capability information of the user equipment that are sent by the user equipment.

S1006: The first base station determines, from the coverage base stations according to the target frequency band, one or more target base stations whose frequencies are located in a target frequency band.

S1007: The first base station sends, to the one or more target base stations, a request message for requesting the one or more target base stations to send system information.

S1008: The one or more target base stations receive the request message sent by the first base station.

S1009: The one or more target base stations send system information of the one or more target base stations to the first base station.

In this embodiment of the present invention, after receiving the request message, the one or more target base stations send the system information of the one or more target base stations to the first base station.

S1010: The first base station receives the system information sent by the one or more target base stations.

S1011: The first base station sends the system information of the one or more target base stations to the user equipment.

S1012: The user equipment receives the system information of the one or more target base stations sent by the first base station.

S1013: The user equipment selects system information of one target base station from the system information of the one or more target base stations as system information of a second base station, and accesses the second base station according to the system information of the second base station.

If the first base station is a high-frequency base station, the second base station is a low-frequency base station or a hybrid low/high-frequency base station, and if the second base station is a hybrid low/high-frequency base station, that the user equipment accesses the second base station is that the user equipment accesses a low-frequency network of the hybrid low/high-frequency base station. If the first base station is a low-frequency base station, the second base station is a high-frequency base station or a hybrid low/high-frequency base station, and if the second base station is a hybrid low/high-frequency base station, that the user equipment accesses the second base station is that the user equipment accesses a high-frequency network of the hybrid low/high-frequency base station. If the first base station is a hybrid low/high-frequency base station, and the user equipment accesses a high-frequency network of the hybrid low/high-frequency base station, the second base station may be a low-frequency base station or a hybrid low/high-frequency base station (the first base station or another hybrid low/high-frequency base station), and if the second base station is a hybrid low/high-frequency base station, that the user equipment accesses the second base station is that the user equipment accesses a low-frequency network of the hybrid low/high-frequency base station. If the first base station is a hybrid low/high-frequency base station, and the user equipment accesses a low-frequency network of the hybrid low/high-frequency base station, the second base station may be a high-frequency base station or a hybrid low/high-frequency base station (the first base station or another hybrid low/high-frequency base station), and if the second base station is a hybrid low/high-frequency base station, that the user equipment accesses the second base station is that the user equipment accesses a high-frequency network of the hybrid low/high-frequency base station.

System information of a first base station is sent cyclically, and system information of a second base station is sent on demand, which decreases load of a broadcast channel. Moreover, the system information of the second base station may be sent by the first base station to user equipment by means of real-time communication between the base stations, and the user equipment does not need to search for the second base station, which reduces power consumption of the user equipment and ensures a requirement of the user equipment on a communications system.

It should be noted that, in the foregoing embodiments, the descriptions of the embodiments have their respective focuses. For a part that is not described in detail in an embodiment, reference may be made to related descriptions in other embodiments. In addition, a person skilled in the art should also understand that all the embodiments described in this specification are exemplary embodiments, and the involved actions and modules are not necessarily mandatory to the present invention.

The steps in the methods in the embodiments of the present invention may be reordered, combined, or deleted according to actual needs.

The modules in the base station and the user equipment in the embodiments of the present invention may be combined, divided, or deleted according to actual needs.

In the embodiments of the present invention, the sending module of the base station may be a radio transmission device, the receiving module of the base station may be a radio receiving device, and the determining module of the base station may be a controller in the base station. In the embodiments of the present invention, the receiving module of the user equipment may be a receiver, the sending module of the user equipment may be a transmitter, and the access module and the selecting module of the user equipment may be a controller of the user equipment. The embodiments of the present invention impose no limitation.

The modules in the embodiments of the present invention may be implemented by a universal integrated circuit, such as a CPU (central processing unit), or by an ASIC (application specific integrated circuit).

A person of ordinary skill in the art may understand that all or a part of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (ROM), or a random access memory (RAM).

The foregoing describes in detail the system information transmission method, the base station, and the user equipment provided in the embodiments of the present invention. Although the principles and implementation manners of the present invention are described by using specific examples, the foregoing embodiments are only intended to help understand the method and core idea of the present invention. In addition, a person of ordinary skill in the art may make modifications to the specific implementation manners and the application scope of the present invention based on to the idea of the present invention as defined by the independent claims. Therefore, the specification shall not be construed as a limitation on the present invention.

## Claims

1. A base station, comprising:
a sending module (101), configured to send system information of the base station to user equipment at a frequency of the base station, to trigger the user equipment to access the base station according to the system information of the base station;
a receiving module (102), configured to receive identifiers of coverage base stations that cover the user equipment and access capability information of the user equipment that are sent by the user equipment, wherein the access capability information is used to indicate a target frequency band that the user equipment is allowed to access, and the target frequency band is different from a frequency band in which the frequency of the base station is located; and
a determining module (103), configured to determine, from the coverage base stations and according to the target frequency band, one or more target base stations whose frequencies are located in the target frequency band, wherein
the sending module (101) is further configured to send system information of the one or more target base stations to the user equipment, to trigger the user equipment to select system information of one target base station from the system information of the one or more target base stations as system information of a target access base station, and access the target access base station according to the system information of the target access base station, wherein
a structure of the system information of the base station comprises one master information block and multiple system information blocks, wherein the master information block is used to broadcast state information of the base station, and the system information blocks are used to broadcast access information required by the user equipment for accessing the base station, and
a structure of the system information of the one or more target base stations comprises one master information block and multiple system information blocks, wherein the master information block is used to broadcast state information of the one or more target base stations, and the system information blocks are used to broadcast access information required by the user equipment for accessing the one or more target base stations, and
wherein the target frequency band that is different from a frequency band in which the frequency of the base station is located, comprises:
when a bandwidth of the frequency band in which the base station is located is between 300 MHz and 6 GHz, a bandwidth of the target frequency band is between 30 GHz and 300 GHz; or
when a bandwidth of the frequency band in which the base station is located is between 30 GHz and 300 GHz, a bandwidth of the target frequency band is between 300 MHz and 6 GHz.

2. The base station according to claim 1, wherein the sending module (101) is further configured to send, to the one or more target base stations, a request message for requesting the one or more target base stations to send system information, to trigger the one or more target base stations to respond to the request message; and
the receiving module (102) is further configured to receive the system information sent by the one or more target base stations.

3. The base station according to claim 1, wherein the base station stores the system information of the one or more target base stations;
the receiving module (102) is further configured to receive updated system information sent by the one or more target base stations; and
the sending module (101) is further configured to send, to the one or more target base stations, a feedback message for feeding back whether the base station has finished receiving the updated system information.

4. The base station according to any one of claims 1 to 3, wherein when the base station is a high-frequency base station, the target access base station is a low-frequency base station or a hybrid low/high-frequency base station; or
when the base station is a low-frequency base station, the target access base station is a high-frequency base station or a hybrid low/high-frequency base station; or
when the base station is a hybrid low/high-frequency base station, the target access base station is any one base station of a high-frequency base station, a low-frequency base station, or a hybrid low/high-frequency base station.

5. a user equipment, comprising:
a receiving module (301), configured to receive system information of a first base station that is sent by the first base station at a frequency of the first base station;
an access module (302), configured to access the first base station according to the system information of the first base station;
a sending module (303), configured to send identifiers of coverage base stations that cover the user equipment and access capability information of the user equipment to the first base station, wherein the access capability information is used to indicate a target frequency band that the user equipment is allowed to access, and the target frequency band is different from a frequency band in which the frequency of the first base station is located, so that the first base station determines, from the coverage base stations and according to the target frequency band, one or more target base stations whose frequencies are located in the target frequency band, and sends system information of the one or more target base stations to the user equipment, wherein
the receiving module (301) is further configured to receive the system information of the one or more target base stations sent by the first base station; and
a selecting module (304), configured to select system information of one target base station from the system information of the one or more target base stations as system information of a second base station, wherein
the access module (302) is further configured to access the second base station according to the system information of the second base station, and wherein
a structure of the system information of the first base station comprises one master information block and multiple system information blocks, wherein the master information block is used to broadcast state information of the first base station, and the system information blocks are used to broadcast access information required by the user equipment for accessing the first base station, and
a structure of the system information of the one or more target base stations comprises one master information block and multiple system information blocks, wherein the master information block is used to broadcast state information of the one or more target base stations, and the system information blocks are used to broadcast access information required by the user equipment for accessing the one or more target base stations, and
wherein the target frequency band that is different from a frequency band in which the frequency of the first base station is located, comprises:
when a bandwidth of the frequency band in which the first base station is located is between 300 MHz and 6 GHz, a bandwidth of the target frequency band is between 30 GHz and 300 GHz; or
when a bandwidth of the frequency band in which the first base station is located is between 30 GHz and 300 GHz, a bandwidth of the target frequency band is between 300 MHz and 6 GHz.

6. The user equipment according to claim 5, wherein when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

7. A system information transmission method, comprising:
sending (S501), by a first base station, system information of the first base station to user equipment at a frequency of the first base station, to trigger the user equipment to access the first base station according to the system information of the first base station;
receiving (S502), by the first base station, identifiers of coverage base stations that cover the user equipment and access capability information of the user equipment that are sent by the user equipment, wherein the access capability information is used to indicate a target frequency band that the user equipment is allowed to access, and the target frequency band is different from a frequency band in which the frequency of the first base station is located;
determining (S503), by the first base station, from the coverage base stations and according to the target frequency band, one or more target base stations whose frequencies are located in the target frequency band; and
sending (S504), by the first base station, system information of the one or more target base stations to the user equipment, to trigger the user equipment to select system information of one target base station from the system information of the one or more target base stations as system information of a second base station, and access the second base station according to the system information of the second base station, wherein
a structure of the system information of the first base station comprises one master information block and multiple system information blocks, wherein the master information block is used to broadcast state information of the first base station, and the system information blocks are used to broadcast access information required by the user equipment for accessing the first base station, and
a structure of the system information of the one or more target base stations comprises one master information block and multiple system information blocks, wherein the master information block is used to broadcast state information of the one or more target base stations, and the system information blocks are used to broadcast access information required by the user equipment for accessing the one or more target base stations, and
wherein the target frequency band that is different from a frequency band in which the frequency of the first base station is located, comprises:
when a bandwidth of the frequency band in which the first base station is located is between 300 MHz and 6 GHz, a bandwidth of the target frequency band is between 30 GHz and 300 GHz; or
when a bandwidth of the frequency band in which the first base station is located is between 30 GHz and 300 GHz, a bandwidth of the target frequency band is between 300 MHz and 6 GHz.

8. The method according to claim 7, wherein before the sending (S504), by the first base station, system information of the one or more target base stations to the user equipment, the method further comprises:
sending (S604), by the first base station to the one or more target base stations, a request message for requesting the one or more target base stations to send system information, to trigger the one or more target base stations to respond to the request message; and
receiving (S605), by the first base station, the system information sent by the one or more target base stations.

9. The method according to claim 7, wherein the first base station stores the system information of the one or more target base stations; and
the method further comprises:
receiving (S705), by the first base station, updated system information sent by the one or more target base stations; and
sending (S706), by the first base station to the one or more target base stations, a feedback message for feeding back whether the first base station has finished receiving the updated system information.

10. The method according to any one of claims 7 to 9, wherein when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

11. A system information transmission method, comprising:
receiving (S801), by user equipment, system information of a first base station that is sent by the first base station at a frequency of the first base station;
accessing (S802), by user equipment, the first base station according to the system information of the first base station;
sending (S803), by the user equipment, identifiers of coverage base stations that cover the user equipment and access capability information of the user equipment to the first base station, wherein the access capability information is used to indicate a target frequency band that the user equipment is allowed to access, and the target frequency band is different from a frequency band in which the frequency of the first base station is located, so that the first base station determines, from the coverage base stations and according to the target frequency band, one or more target base stations whose frequencies are located in the target frequency band, and sends system information of the one or more target base stations to the user equipment;
receiving (S804), by the user equipment, the system information of the one or more target base stations sent by the first base station; and
selecting (S805), by the user equipment, system information of one target base station from the system information of the one or more target base stations as system information of a second base station, and accessing the second base station according to the system information of the second base station, wherein
a structure of the system information of the first base station comprises one master information block and multiple system information blocks, wherein the master information block is used to broadcast state information of the first base station, and the system information blocks are used to broadcast access information required by the user equipment for accessing the first base station, and
a structure of the system information of the one or more target base stations comprises one master information block and multiple system information blocks, wherein the master information block is used to broadcast state information of the one or more target base stations, and the system information blocks are used to broadcast access information required by the user equipment for accessing the one or more target base stations, and
wherein the target frequency band that is different from a frequency band in which the frequency of the first base station is located, comprises:
when a bandwidth of the frequency band in which the first base station is located is between 300 MHz and 6 GHz, a bandwidth of the target frequency band is between 30 GHz and 300 GHz; or
when a bandwidth of the frequency band in which the first base station is located is between 30 GHz and 300 GHz, a bandwidth of the target frequency band is between 300 MHz and 6 GHz.

12. The method according to claim 11, wherein when the first base station is a high-frequency base station, the second base station is a low-frequency base station or a hybrid low/high-frequency base station; or
when the first base station is a low-frequency base station, the second base station is a high-frequency base station or a hybrid low/high-frequency base station; or
when the first base station is a hybrid low/high-frequency base station, the second base station is any one base station of a high-frequency base station, a low-frequency base station, or a hybrid low/high-frequency base station.

## Patentansprüche

1. Basisstation, umfassend:
ein Sendemodul (101), konfiguriert zum Senden von Systeminformationen der Basisstation an eine Benutzerausrüstung bei einer Frequenz der Basisstation, um auszulösen, dass die Benutzerausrüstung gemäß den Systeminformationen der Basisstation auf die Basisstation zugreift;
ein Empfangsmodul (102), konfiguriert zum Empfangen von Kennungen von Abdeckungsbasisstationen, die die Benutzerausrüstung abdecken, und Zugriffsfähigkeit-Informationen der Benutzerausrüstung, die von der Benutzerausrüstung gesandt werden, wobei die Zugriffsfähigkeit-Informationen verwendet werden, ein Zielfrequenzband anzugeben, auf das zuzugreifen der Benutzerausrüstung gestattet ist, und wobei das Zielfrequenzband von einem Frequenzband verschieden ist, in dem sich die Frequenz der Basisstation befindet; und
ein Bestimmungsmodul (103), konfiguriert zum Bestimmen, aus den Abdeckungsbasisstationen und gemäß dem Zielfrequenzband, einer oder mehrerer Zielbasisstationen, deren Frequenzen sich in dem Zielfrequenzband befinden, wobei das Sendemodul (101) ferner konfiguriert ist zum Senden von Systeminformationen der einen oder mehreren Zielbasisstationen an die Benutzerausrüstung, um auszulösen, dass die Benutzerausrüstung Systeminformationen einer Zielbasisstation aus den Systeminformationen der einen oder mehreren Zielbasisstationen als Systeminformationen einer Zielzugriffsbasisstation auswählt und gemäß den Systeminformationen der Zielzugriffsbasisstation auf die Zielzugriffsbasisstation zugreift, wobei
eine Struktur der Systeminformationen der Basisstation einen Hauptinformationsblock und mehrere Systeminformationsblöcke umfasst, wobei der Hauptinformationsblock zum Rundsenden von Statusinformationen der Basisstation verwendet wird und die Systeminformationsblöcke zum Rundsenden von Zugriffsinformationen, die durch die Benutzerausrüstung zum Zugreifen auf die Basisstation benötigt werden, verwendet werden, und
eine Struktur der Systeminformationen der einen oder mehreren Zielbasisstationen einen Hauptinformationsblock und mehrere Systeminformationsblöcke umfasst, wobei der Hauptinformationsblock zum Rundsenden von Statusinformationen der einen oder mehreren Zielbasisstationen verwendet wird und die Systeminformationsblöcke zum Rundsenden von Zugriffsinformationen, die durch die Benutzerausrüstung zum Zugreifen auf die eine oder mehreren Zielbasisstationen benötigt werden, verwendet werden, und
wobei das Zielfrequenzband, das von einem Frequenzband, in dem sich die Frequenz der Basisstation befindet, verschieden ist, umfasst:
wenn eine Bandbreite des Frequenzband, in dem sich die Basisstation befindet, zwischen 300 MHz und 6 GHz ist, eine Bandbreite des Zielfrequenzbands zwischen 30 GHz und 300 GHz ist; oder
wenn eine Bandbreite des Frequenzbands, in dem sich die Basisstation befindet, zwischen 30 GHz und 300 GHz ist, eine Bandbreite des Zielfrequenzbands zwischen 300 MHz und 6 GHz ist.

2. Basisstation nach Anspruch 1, wobei das Sendemodul (101) ferner konfiguriert ist zum Senden, an die eine oder mehreren Zielbasisstationen, einer Anforderungsnachricht zum Anfordern, dass die eine oder mehreren Zielbasisstationen Systeminformationen senden, um auszulösen, dass die eine oder mehreren Zielbasisstationen auf die Anforderungsnachricht antworten; und
das Empfangsmodul (102) ferner konfiguriert ist zum Empfangen der durch die eine oder mehreren Zielbasisstationen gesandten Systeminformationen.

3. Basisstation nach Anspruch 1, wobei die Basisstation die Systeminformationen der einen oder mehreren Zielbasisstationen speichert;
das Empfangsmodul (102) ferner konfiguriert ist zum Empfangen aktualisierter Systeminformationen, gesandt durch die eine oder mehreren Zielbasisstationen; und das Sendemodul (101) ferner konfiguriert ist zum Senden, an die eine oder mehreren Zielbasisstationen, einer Rückmeldungsnachricht zum Rückmelden, ob die Basisstation das Empfangen der aktualisierten Systeminformationen beendet hat.

4. Basisstation nach einem der Ansprüche 1 bis 3, wobei, wenn die Basisstation eine Hochfrequenz-Basisstation ist, die Zielbasisstation eine Niederfrequenz-Basisstation oder eine Hybrid-Nieder-/Hochfrequenz-Basisstation ist; oder
wenn die Basisstation eine Niederfrequenz-Basisstation ist, die Zielbasisstation eine Hochfrequenz-Basisstation oder eine Hybrid-Nieder-/Hochfrequenz-Basisstation ist;
oder
wenn die Basisstation eine Hybrid-Nieder-/Hochfrequenz-Basisstation ist, die Zielbasisstation eine beliebige Basisstation aus einer Hochfrequenz-Basisstation, einer Niederfrequenz-Basisstation oder einer Hybrid-Nieder-/Hochfrequenz-Basisstation ist.

5. Benutzerausrüstung, umfassend:
ein Empfangsmodul (301), konfiguriert zum Empfangen von Systeminformationen einer ersten Basisstation, die durch die erste Basisstation bei einer Frequenz der ersten Basisstation gesandt werden;
ein Zugriffsmodul (302), konfiguriert zum Zugreifen auf die erste Basisstation gemäß den Systeminformationen der ersten Basisstation;
ein Sendemodul (303), konfiguriert zum Senden von Kennungen von Abdeckungsbasisstationen, die die Benutzerausrüstung abdecken, und Zugriffsfähigkeit-Informationen der Benutzerausrüstung an die erste Basisstation, wobei die Zugriffsfähigkeit-Informationen verwendet werden, ein Zielfrequenzband anzugeben, auf das zuzugreifen der Benutzerausrüstung gestattet ist, und wobei das Zielfrequenzband von einem Frequenzband verschieden ist, in dem sich die Frequenz der ersten Basisstation befindet; so dass die erste Basisstation aus den Abdeckungsbasisstationen und gemäß dem Zielfrequenzband eine oder mehrere Zielbasisstationen, deren Frequenzen sich in dem Zielfrequenzband befinden, bestimmt und Systeminformationen der einen oder mehreren Zielbasisstationen an die Benutzerausrüstung sendet, wobei
das Empfangsmodul (301) ferner konfiguriert ist zum Empfangen der durch die erste Basisstation gesandten Systeminformationen der einen oder mehreren Zielbasisstationen; und
ein Auswahlmodul (304), konfiguriert zum Auszählen von Systeminformationen einer Zielbasisstation aus den Systeminformationen der einen oder mehreren Zielbasisstationen als Systeminformationen einer zweiten Basisstation, wobei das Zugriffsmodul (302) ferner konfiguriert ist zum Zugreifen auf die zweite Basisstation gemäß den Systeminformationen der zweiten Basisstation, und wobei eine Struktur der Systeminformationen der ersten Basisstation einen Hauptinformationsblock und mehrere Systeminformationsblöcke umfasst, wobei der Hauptinformationsblock zum Rundsenden von Statusinformationen der ersten Basisstation verwender wird und die Systeminformationsblöcke zum Rundsenden von Zugriffsinformationen, die durch die Benutzerausrüstung zum Zugreifen auf die erste Basisstation benötigt werden, verwendet werden, und
eine Struktur der Systeminformationen der einen oder mehreren Zielbasisstationen einen Hauptinformationsblock und mehrere Systeminformationsblöcke umfasst, wobei der Hauptinformationsblock zum Rundsenden von Statusinformationen der einen oder mehreren Zielbasisstationen verwendet wird und die Systeminformationsblöcke zum Rundsenden von Zugriffsinformationen, die durch die Benutzerausrüstung zum Zugreifen auf die eine oder mehreren Zielbasisstationen benötigt werden, verwendet werden, und
wobei das Zielfrequenzband, das von einem Frequenzband, in dem sich die Frequenz der ersten Basisstation befindet, verschieden ist, umfasst:
wenn eine Bandbreite des Frequenzbands, in dem sich die erste Basisstation befindet, zwischen 300 MHz und 6 GHz ist, eine Bandbreite des Zielfrequenzbands zwischen 30 GHz und 300 GHz ist; oder
wenn eine Bandbreite des Frequenzbands, in dem sich die erste Basisstation befindet, zwischen 30 GHz und 300 GHz ist, eine Bandbreite des Zielfrequenzbands zwischen 300 MHz und 6 GHz ist.

6. Benutzerausrüstung nach Anspruch 5, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder
wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder
wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

7. Systeminformationen-Übertragungsverfahren, umfassend:
Senden (S501), durch eine erste Basisstation, von Systeminformationen der ersten Basisstation an eine Benutzerausrüstung bei einer Frequenz der ersten Basisstation, um auszulösen, dass die Benutzerausrüstung gemäß den Systeminformationen der ersten Basisstation auf die erste Basisstation zugreift;
Empfangen (S502), durch die erste Basisstation, von Kennungen von Abdeckungsbasisstationen, die die Benutzerausrüstung abdecken, und Zugriffsfähigkeit-Informationen der Benutzerausrüstung, die von der Benutzerausrüstung gesandt werden, wobei die Zugriffsfähigkeit-Informationen verwendet werden, ein Zielfrequenzband anzugeben, auf das zuzugreifen der Benutzerausrüstung gestattet ist, und wobei das Zielfrequenzband von einem Frequenzband verschieden ist, in dem sich die Frequenz der ersten Basisstation befindet; und
Bestimmen (S503), durch die erste Basisstation, aus den Abdeckungsbasisstationen und gemäß dem Zielfrequenzband, einer oder mehrerer Zielbasisstationen, deren Frequenzen sich in dem Zielfrequenzband befinden; und
Senden (S504), durch die erste Basisstation, von System Informationen der einen oder mehreren Zielbasisstationen an die Benutzerausrüstung, um auszulösen, dass die Benutzerausrüstung Systeminformationen einer Zielbasisstation aus den Systeminformationen der einen oder mehreren Zielbasisstationen als Systeminformationen einer zweiten Basisstation auswählt und gemäß den Systeminformationen der zweiten Basisstation auf die zweite Basisstation zugreift, wobei
eine Struktur der Systeminformationen der ersten Basisstation einen Hauptinformationsblock und mehrere Systeminformationsblöcke umfasst, wobei der Hauptinformationsblock zum Rundsenden von Statusinformationen der ersten Basisstation verwendet wird und die Systeminformationsblöcke zum Randenden von Zugriffsinformationen, die durch die Benutzerausrüstung zum Zugreifen auf die erste Basisstation benötigt werden, verwendet werden, und
eine Struktur der Systeminformationen der einen oder mehreren Zielbasisstationen einen Hauptinformationsblock und mehrere Systeminformationsblöcke umfasst, wobei der Hauptinformationsblock zum Rundsenden von Statusinformationen der einen oder mehreren Zielbasisstationen verwendet wird und die Systeminformationsblöcke zum Rundsenden von Zugriffsinformationen, die durch die Benutzerausrüstung zum Zugreifen auf die eine oder mehreren Zielbasisstationen benötigt werden, verwendet werden, und
wobei das Zielfrequenzband, das von einem Frequenzband, in dem sich die Frequenz der ersten Basisstation befindet, verschieden ist, umfasst:
wenn eine Bandbreite des Frequenzband, in dem sich die erste Basisstation befindet, zwischen 300 MHz und 6 GHz ist, eine Bandbreite des Zielfrequenzbands zwischen 30 GHz und 300 GHz ist; oder
wenn eine Bandbreite des Frequenzbands, in dem sich die erste Basisstation befindet, zwischen 30 GHz und 300 GHz ist, eine Bandbreite des Zielfrequenzbands zwischen 300 MHz und 6 GHz ist.

8. Verfahren nach Anspruch 7, wobei das Verfahren vor dem Senden (S504), durch die erste Basisstation, von Systeminformationen der einen oder mehreren Zielbasisstationen an die Senutzerausrüstung ferner umfasst:
Senden (S604), durch die erste Basisstation an die eine oder mehreren Zielbasisstationen, einer Anforderungsnachricht zum Anfordern, dass die eine oder mehreren Zielbasisstationen Systeminformationen senden, um auszulösen, dass die eine oder mehreren Zielbasisstationen auf die Anforderungsnachricht antworten; und Empfangen (S605), durch die erste Basisstation, der durch die eine oder mehreren Zielbasisstationen gesandten Systeminformationen.

9. Verfahren nach Anspruch 7, wobei die erste Basisstation die Systeminformationen der einen oder mehreren Zielbasisstationen speichert; und
das Verfahren ferner umfasst:
Empfangen (S705), durch die erste Basisstation, aktualisierter Systeminformationen, gesandt durch die eine oder mehreren Zielbasisstationen; und
Senden (S706), durch die erste Basisstation an die eine oder mehreren Zielbasisstationen, einer Rückmeldungsnachricht zum Rückmelden, ob die erste Basisstation das Empfangen der aktualisierten Systeminformationen beendet hat.

10. Verfahren nach einem der Ansprüche 7 bis 9, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder
wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder
wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

11. Systeminformationen-Übertragtungsverfahren, umfassend:
Empfangen (S801), durch eine Benutzerausrüstung, von Systeminformationen einer ersten Basisstation, die durch die erste Basisstation bei einer Frequenz der ersten Basisstation gesandt werden;
Zugreifen (S802), durch die Benutzerausrüstung, auf die erste Basisstation gemäß den Systeminformationen der ersten Basisstation;
Senden (S803), durch die Benutzerausrüstung, von Kennungen von Abdeckungsbasisstationen, die die Benutzerausrüstung abdecken, und Zugriffsfahigkeit-Informationen der Benutzerausrüstung an die erste Basisstation, wobei die Zugriffsfähigkeit-Informationen verwendet werden, ein Zielfrequenzband anzugeben, auf das zuzugreifen der Benutzerausrüstung gestattet ist, und wobei das Zielfrequenzband von einem. Frequenzband verschieden ist, in dem sich die Frequenz der ersten Basisstation befindet; so dass die erste Basisstation aus den Abdeckungsbasisstationen und gemäß dem Zielfrequenzband eine oder mehrere Zielbasisstationen, deren Frequenzen sich in dem Zielfrequenzband befinden, bestimmt und Systeminformationen der einen oder mehreren Zielbasisstationen an die Benutzerausrüstung sendet;
Empfangen (S804), durch die Benutzerausrüstung, der durch die erste Basisstation gesandten Systeminformationen der einen oder mehreren Zielbasisstationen; und
Auswählen (S805), durch die Benutzerausrüstung, von Systeminformationen einer Zielbasisstation aus den Systeminformationen der einen oder mehreren Zielbasisstationen als Systeminformationen einer zweiten Basisstation, und Zugreifen auf die zweite Basisstation gemäß den Systeminformationen der zweiten Basisstation, wobei
eine Struktur der Systeminformationen der ersten Basisstation einen Hauptinformationsblock und mehrere Systeminformationsblöcke umfasst, wobei der Hauptinformationsblock zum Rundsenden von Statusinformationen der ersten Basisstation verwendet wird und die Systeminformationsblöcke zum Rundsenden von Zugriffsinfonnationen, die durch die Benutzerausrüstung zum Zugreifen auf die erste Basisstation benötigt werden, verwendet werden, und
eine Struktur der Systeminformationen der einen oder mehreren Zielbasisstationen einen Hauptinformationsblock und mehrere Systeminformationsblöcke umfasst, wobei der Hauptinformationsblock zum Rundsenden von Statusinformationen der einen oder mehreren Zielbasisstationen verwendet wird und die Systeminformationsblöcke zum Rundsenden von Zugriffsinformationen, die durch die Benutzerausrüstung zum Zugreifen auf die eine oder mehreren Zielbasisstationen benötigt werden, verwendet werden, und
wobei das Ziel frequenzband, das von einem Frequenzband, in dem sich die Frequenz der ersten Basisstation befindet, verschieden ist, umfasst:
wenn eine Bandbreite des Frequenzband, in dem sich die erste Basisstation befindet, zwischen 300 MHz und 6 GHz ist, eine Bandbreite des Zielfrequenzbands zwischen 30 GHz und 300 GHz ist, oder
wenn eine Bandbreite des Frequenzbands, in dem sich die erste Basisstation befindet, zwischen 30 GHz und 300 GHz ist, eine Bandbreite des Zielfrequenzbands zwischen 300 MHz und 6 GHz ist.

12. Verfahren nach Anspruch 11, wobei, wenn die erste Basisstation eine Hochfrequenz-Basisstation ist, die zweite Basisstation eine Niederfrequenz-Basisstation oder eine Hybrid-Nieder-/Hochfrequenz-Basisstation ist; oder
wenn die erste Basisstation eine Niederfrequenz-Basisstation ist, die zweite Basisstation eine Hochfrequenz-Basisstation oder eine Hybrid-Nieder-/Hochfrequenz-Basisstation ist; oder
wenn die erste Basisstation eine Hybrid-Nieder-/Hochfrequenz-Basisstation ist, die zweite Basisstation eine beliebige Basisstation einer Hochfrequenz-Basisstation, einer Niederfrequenz-Basisstation oder einer Hybrid-Nieder-/Hochfrequenz-Basisstation ist.

## Revendications

1. Station de base comprenant :
un module d'envoi (101), configuré pour envoyer des informations système de la station de base à un équipement utilisateur à une fréquence de la station de base, pour déclencher l'équipement utilisateur pour accéder à la station de base en fonction des informations système de la station de base;
un module de réception (102), configuré pour recevoir des identifiants de stations de base de couverture qui couvrent l'équipement utilisateur et des informations de capacité d'accès de l'équipement utilisateur qui sont envoyées par l'équipement utilisateur, où les informations de capacité d'accès sont utilisées pour indiquer une bande de fréquences cible à laquelle l'équipement utilisateur est autorisé à accéder, et la bande de fréquences cible est différente d'une bande de fréquences dans laquelle se trouve la fréquence de la station de base ; et
un module de détermination (103), configuré pour déterminer, à partir des stations de base de couverture et en fonction de la bande de fréquences cible, une ou plusieurs stations de base cibles dont les fréquences sont situées dans la bande de fréquences cible, où
le module d'envoi (101) est en outre configuré pour envoyer des informations système des une ou plusieurs stations de base cibles à l'équipement utilisateur, pour déclencher l'équipement utilisateur pour sélectionner des informations système d'une station de base cible à partir des informations système des une ou plusieurs stations de base cibles comme informations système d'une station de base d'accès cible, et accéder à la station de base d'accès cible en fonction des informations système de la station de base d'accès crible, où
une structure des informations système de la station de base comprend un bloc d'informations maître et plusieurs blocs d'informations système, où le bloc d'informations maître est utilisé pour diffuser des informations d'état de la station de base, et les blocs d'informations système sont utilisés pour diffuser des informations d'accès requises par l'équipement utilisateur pour accéder à la station de base, et
une structure des informations système des une ou plusieurs stations de base cibles comprend un bloc d'informations maître et plusieurs blocs informations système, où le bloc d'informations maître est utilisé pour diffuser des informations d'état des une ou plusieurs stations de base cibles, et les blocs d'informations système sont utilisés pour diffuser des informations d'accès requises par l'équipement utilisateur pour accéder aux une ou plusieurs stations de base cibles, et
où la bande de fréquences cible qui est différente d'une bande de fréquences dans laquelle se situe la fréquence de la station de base comprend :
lorsqu'une bande passante de la bande de fréquences dans laquelle est située la station de base se situe entre 300 MHz et 6 GHz, une bande passante de la bande de fréquences cible se situe entre 30 GHz et 300 GHz ; ou
lorsqu'une bande passante de la bande de fréquences dans laquelle est située la station de base se situe entre 30 GHz et 300 GHz, une bande passante de la bande de fréquences cible se situe entre 300 MHz et 6 GHz.

2. Station de base selon la revendication 1, dans laquelle le module d'envoi (101) est en outre configuré pour envoyer, aux une ou plusieurs stations de base cibles, un message de demande pour demander aux une ou plusieurs stations de base cibles d'envoyer des informations système, pour déclencher les une ou plusieurs stations de base cibles pour répondre au message de demande ; et
le module de réception (102) est en outre configuré pour recevoir les informations système envoyées par les une ou plusieurs stations de base cibles.

3. Station de base selon la revendication 1, dans laquelle la station de base stocke les informations système des une ou plusieurs stations de base cibles ;
le module de réception (102) est en outre configuré pour recevoir des informations système mises à jour envoyées par les une ou plusieurs stations de base cibles ; et
le module d'envoi (101) est en outre configuré pour envoyer, aux une ou plusieurs stations de base cibles, un message de retour pour indiquer en retour si la station de base a fini de recevoir les informations système mises jour.

4. Station de base selon l'une quelconque des revendications 1 à 3, dans laquelle, lorsque la station de base est une station de base haute fréquence, la station de base d'accès cible est une station de base basse fréquence ou une station de base hybride basse fréquence/haute fréquences ; ou
lorsque la station de base est une station de base basse fréquence, la station de base d'accès cible est une station de base haute fréquences ou une station de base hybride basse fréquence/haute fréquence ; ou
lorsque la station de base est une station de base hybride basse fréquence/haute fréquence, la station de base d'accès cible est une station de base quelconque parmi une station de base haute fréquence, une station de base basse fréquence, ou une station de base hybride basse fréquence/haute fréquence.

5. Équipement utilisateur, comprenant :
un module de réception (301), configuré pour recevoir des informations système d'une première station de base qui sont envoyées par la première station de base à une fréquence de la première station de base ;
un module d'accès (302), configuré pour accéder la première station de base en fonction des informations système de la première station de base ;
un module d'envoi (303), configuré pour envoyer des identifiants de stations de base de couverture qui couvrent l'équipement utilisateur et des informations de capacité d'accès de l'équipement utilisateur à la première station de base, où les informations de capacité d'accès sont utilisées pour indiquer une bande de fréquences cible à laquelle l'équipement utilisateur est autorisé à accéder, et la bande de fréquences cible est différente d'une bande de fréquences dans laquelle se situe la fréquence de la première station de base, de sorte que la première station de base détermine, à partir des stations de base de couverture et suivant la bande de fréquences cible, une ou plusieurs stations de base cibles dont les fréquences sont situées dans la bande de fréquences cible, et envoie des informations système des une ou plusieurs stations de base cibles à l'équipement utilisateur, où :
le module de réception (301) est en outre configuré pour recevoir les informations système des une ou plusieurs stations de base cibles envoyées par la première station de base ; et
un module de sélection (304), configuré pour sélectionner des informations système d'une station de base cible parmi les informations système des une ou plusieurs stations de base cibles comme informations système d'une seconde station de base, où
le module d'accès (302) est en outre configuré pour accéder à la seconde station de base en fonction des informations système de la seconde station de base, et où une structure des informations système de la première station de base comprend un bloc d'informations maître et plusieurs blocs d'infornnations système, où le bloc d'informations maître est utilisé pour diffuser des informations d'état de la première station de base, et les blocs d'informations système sont utilisés pour diffuser des informations d'accès requises par l'équipement utilisateur pour accéder à la première station de base, et
une structure des informations système des une ou plusieurs stations de base cibles comprend un bloc d'informations maître et plusieurs blocs d'informations système, où le bloc d'informations maître est utilisé pour diffuser des informations d'état des une ou plusieurs stations de base cibles, et les blocs d'informations système sont utilisés pour diffuser des informations d'accès requises par l'équipement utilisateur pour accéder aux une ou plusieurs stations de base cibles, et
ou la bande de fréquences cible qui est différente d'une bande de fréquences dans laquelle se situe la fréquence de la première station de base comprend :
lorsqu'une bande passante de la bande de fréquences dans laquelle est située la première station de base se situe entre 300 MHz et 6 GHz, une bande passante de la bande de fréquences cible se situe entre 30 GHz et 300 GHz ; ou
lorsqu'une bande passante de la bande de fréquences dans laquelle est située la première station de base se situe entre 30 GHz et 300 GHz, une bande passante de la bande de fréquences cible se situe entre 300 MHz et 6 GHz.

6. Équipement utilisateur selon la revendication 5, dans lequel, lorsque la première station de base est une station de base haute fréquence, la seconde station de base est une station de base basse fréquence ou une station de base hybride basse fréquence/haute fréquence ; ou
lorsque la première station de base est une station de base basse fréquence, la seconde station de base est une station de base haute fréquence ou une station de base hybride basse fréquence/haute fréquence ; ou
lorsque la première station de base est une station de base hybride basse fréquence/haute fréquences, la seconde station de base est une station de base quelconque parmi une station de base haute fréquence, une station de base basse fréquence, ou une station de base hybride basse fréquence/haute fréquence.

7. Procédé de transmission d'informations système, comprenant les étapes suivantes :
envoyer (S501), par une première station de base, des informations système de la première station de base à un équipement utilisateur à une fréquence de la première station de base, pour déclencher l'équipement utilisateur pour qu'il accède à la première station de base en fonction des informations système de la première station de base ;
recevoir (S502), par la première station de base, des identifiants de stations de base de couverture qui couvrent l'équipement utilisateur et des informations de capacité d'accès de l'équipement utilisateur qui sont envoyées par l'équipement utilisateur, où les informations de capacité d'accès sont utilisées pour indiquer une bande de fréquences cible à laquelle l'équipement utilisateur est autorité à accéder, et la bande de fréquences cible est différente d'une bande de fréquences dans laquelle se trouve la fréquence de la première station de base ;
déterminer (S503), par la première station de base, à partir des stations de base de couverture et en fonction de la bande de fréquences cible, une ou plusieurs stations de base cibles dont les fréquences sont situées dans la bande de fréquences cible ; et
envoyer (S504), par la première station de base, des informations système des une ou plusieurs stations de base cibles à l'équipement utilisateur, pour déclencher l'équipement utilisateur pour sélectionner des informations système d'une station de base cible à partir des informations système des une ou plusieurs stations de base cibles comme informations système d'une seconde station de base, et accéder à la seconde station de base en fonction des informations système de la seconde station de base, où
une structure des informations système de la première station de base comprend un bloc d'informations maître et plusieurs blocs d'informations système, où le bloc d'informations maître est utilisé pour diffuser des informations d'état de la station de base, et les blocs d'informations système sont utilisés pour diffuser des informations d'accès requises par l'équipement utilisateur pour accéder à la première station de base, et
une structure des informatisons système des une ou plusieurs stations de base cibles comprend un bloc d'informations maître et plusieurs blocs d'informations système, où le bloc d'informations maître est utilisé pour diffuser des informations d'état des une ou plusieurs stations de base cibles, et les blocs d'informations système sont utilisés pour diffuser des informations d'accès requises par l'équipement utilisateur pour accéder aux une ou plusieurs stations de base cibles, et
où la bande de fréquences cible qui est différente d'une bande de fréquences dans laquelle se situe la fréquence de la première station de base comprend :
lorsqu'une bande passante de la bande de fréquences dans laquelle est située la première station de base se situe entre 300 MHz et 6 GHz, une bande passante de la bande de fréquences cible se situe entre 30 GHz et 300 GHz ; ou
lorsqu'une bande passante de la bande de fréquences dans laquelle est située la première station de base se situe entre 30 GHz et 300 GHz, une bande passante de la bande de fréquences cible se situe entre 300 MHz et 6 GHz.

8. Procédé selon la revendication 7, dans lequel, avant l'envoi (S504), par la première station de base, des informations système des une ou plusieurs stations de base cibles à l'équipement utilisateur, le procédé comprend en outre les étapes suivantes :
envoyer (S604), par la première station de base aux une ou plusieurs stations de base cibles, un message de demande pour demander aux une ou plusieurs stations de base cibles d'envoyer des informations système pour déclencher les une ou plusieurs stations de base cibles pour répondre au message de demande ; et
recevoir (S605), par la première station de base, les informations système envoyées par les une ou plusieurs stations de base cibles.

9. Procédé selon la revendication 7, dans lequel la première station de base stocke les informations système des une ou plusieurs stations de base cibles ; et
le procédé comprend en outre les étapes suivantes :
recevoir (S705), par la première station de base, des informations système mises à jour envoyées par les une ou plusieurs stations de base cibles ; et
envoyer (S706), par la première station de base aux une ou plusieurs stations de base cibles, un message de retour pour indiquer en retour si la première station de base a fini de recevoir les informations système mises à jour.

10. Procédé selon l'une quelconque des revendications 7 à 9, dans lequel lorsque la première station de base est une station de base haute fréquence, la seconde station de base est une station de base basse fréquence ou une station de base hybride basse fréquence/haute fréquence ; ou
lorsque la première station de base est une station de base basse fréquence, la seconde station de base est une station de base haute fréquence ou une station de base hybride basse fréquence/haute fréquence ; ou
lorsque la première station de base est une station de base hybride basse fréquence/haute fréquence, la seconde station de base est une station de base quelconque parmi une station de base haute fréquence, une station de base basse fréquence, ou une station de base hybride basse fréquence/haute fréquence.

11. Procédé de transmission d'informations système, comprenant les étapes suivantes :
recevoir (S801), par l'équipement utilisateur, des informations système d'une première station de base qui sont envoyées par la première station de base à une fréquence de la première station de base ;
accéder (S802), par l'équipement utilisateur, à la première station de base en fonction des informations système de la première station de base ;
envoyer (S803), par l'équipement utilisateur, des identifiants de stations de base de couverture qui couvrent l'équipement utilisateur et des informations de capacité d'accès de l'équipement utilisateur à la première station de base, où les informations de capacité d'accès sont utilisées pour indiquer une bande de fréquences cible à laquelle l'équipement utilisateur est autorisé à accéder, et la bande de fréquences cible est différente d'une bande de fréquences dans laquelle se situe la fréquence de la première station de base, de sorte que la première station de base détermine, à partir des stations de base de couverture et suivant la bande de fréquences cible, une ou plusieurs stations de base cibles dont les fréquences sont situées dans la bande de fréquences cible, et envoie des informations système des une ou plusieurs stations de base cibles à l'équipement utilisateur ;
recevoir (S804), par l'équipement utilisateur, les informations système des une ou plusieurs stations de base cibles envoyées par la première station de base ; et
sélectionner (S805), par l'équipement utilisateur, des informations système d'une station de base cible parmi les informations système des une ou plusieurs stations de base cibles comme informations système d'une seconde station de base, et accéder à la seconde station de base en fonction des informations système de la seconde station de base, où
une structure des informations système de la première station de base comprend un bloc d'informations maître et plusieurs blocs d'informations système, où le bloc d'informations maître est utilisé pour diffuser des informations d'état de la première station de base, et les blocs d'informations système sont utilisés pour diffuser des informations d'accès requises par l'équipement utilisateur pour accéder à la première station de base, et
une structure des informations système des une ou plusieurs stations de base cibles comprend un bloc d'informations maître et plusieurs blocs d'informations système, où le bloc d'informations maître est utilisé pour diffuser des informations d'état des une ou plusieurs stations de base cibles, et les blocs d'informations système sont utilisés pour diffuser des informations d'accès requises par l'équipement utilisateur pour accéder aux une ou plusieurs stations de base cibles, et
où la bande de fréquences cible qui est différente d'une bande de fréquences dans laquelle se situe la fréquence de la première station de base comprend :
lorsqu'une bande passante de la bande de fréquences dans laquelle est située la première station de base se situe entre 300 MHz et 6 GHz, une bande passante de la bande de fréquences cible se situe entre 30 GHz et 300 GHz ; ou
lorsqu'une bande passante de la bande de fréquences dans laquelle est située la première station de base se situe entre 30 GHz et 300 GHz, une bande passante de la bande de fréquences cible se situe entre 300 MHz et 6 GHz.

12. Procédé selon la revendication 11, dans lequel, lorsque la première station de base est une station de base haute fréquence, la seconde station de base est une station de base basse fréquence ou une station de base hybride basse fréquence/haute fréquence ; ou lorsque la première station de base est une station de base basse fréquence, la seconde station de base est une station de base haute fréquence ou une station de base hybride basse fréquence/haute fréquence ; ou
lorsque la première station de base est une station de base hybride basse fréquence/haute fréquence, la seconde station de base est une station de base quelconque parmi une station de base haute fréquence, une station de base basse fréquence, ou une station de base hybride basse fréquence/haute fréquence.
